# FASCICULE DE BREVET EUROPEEN

(11) **EP 1 607 328 B1**
(45) Date de publication et mention de la délivrance du brevet: **22.10.2008**
(21) Numéro de dépôt: 05290996.7
(22) Date de dépôt: 10.05.2005
(51) Int. Cl.: B64C 30/00, B64D 33/02

(54) **Installation motrice pour avion supersonique**
Triebwerkanlage für Überschallflugzeuge
Power plant for supersonic aircraft

(30) Priorité: 24.05.2004 FR 0405557
(43) Date de publication de la demande: 21.12.2005
(73) Titulaire: AIRBUS France, 31060 Toulouse (FR)
(72) Inventeur: Lebas, Guillaume, 31200 Toulouse (FR)
(74) Mandataire: Hauer, Bernard

(56) Documents cités:
- US-A- 5 934 607
- US-A1- 2002 096 598
- "BOEINNG MODEL REVEALS DETAILS" FLIGHT INTERNATIONAL, REED BUSINESS INFORMATION, HAYWARDS HEATH, GB, vol. 159, no. 4786, 26 juin 2001 (2001-06-26), page 15, XP001039275 ISSN: 0015-3710
- TINDELL R H: "INLET DRAG AND STABILITY CONSIDERATIONS FOR M0 = 2.00 DESIGN" AIAA/SAE/ASME/ASEE JOINT PROPULSION CONFERENCE AND EXHIBIT, XX, XX, juin 1980 (1980-06), XP000998247

## Description

La présente invention concerne une installation motrice pour avion supersonique. Cette installation motrice comprend au moins un réacteur et au moins une nacelle de réacteur qui est destinée à être montée directement sous la voilure ou sur le fuselage de l'avion.

On sait qu'une telle nacelle comporte généralement, en amont dans le sens d'entrée d'air, une structure d'entrée d'air, dont le rôle essentiel sur un avion supersonique est de transformer l'écoulement d'air en amont, qui est supersonique et proche du Mach de croisière de l'avion, en un écoulement admissible par la soufflante du réacteur monté dans la nacelle, soit en général à un Mach de l'ordre de 0,4 à 0,6. Cet écoulement d'air doit être le plus homogène possible en espace (faible distorsion) et subir le moins de chute de pression totale (rendement) en traversant ladite structure d'entrée d'air. De plus, la nacelle doit rester fonctionnelle et stable, malgré des variations de débit qui peuvent avoir des origines diverses (variations de Mach amont, de température, d'incidence locale, ...) et des variations de débit en face aval (dues à des variations du régime moteur par exemple).

Par le document US-2002/0096598, on connaît une installation motrice pour un avion supersonique, qui comporte :
- au moins un réacteur ; et
- au moins une nacelle de réacteur comprenant, en amont dans le sens d'entrée d'air, une structure d'entrée d'air pourvue en amont d'une face d'entrée présentant une section conique elliptique.

La présente invention concerne une installation motrice pour avion supersonique, qui présente des performances améliorées en particulier en vol supersonique, avec notamment une réduction de la traînée.

A cet effet, selon l'invention, ladite installation motrice pour avion supersonique, du type comportant :
- au moins un réacteur ; et
- au moins une nacelle de réacteur comprenant, en amont dans le sens d'entrée d'air, une structure d'entrée d'air pourvue en amont d'une face d'entrée présentant une section conique elliptique,
est remarquable en ce que :
- ladite installation motrice comporte, de plus, une rampe de compression qui est montée de façon coaxiale par rapport à la nacelle de réacteur, au niveau de la face d'entrée de la structure d'entrée d'air de ladite nacelle de réacteur ; et
- ladite face d'entrée de la structure d'entrée d'air présentant une section conique elliptique, est définie par l'intersection, d'une part, d'une onde de choc conique engendrée par ladite rampe de compression conique pour un nombre de Mach particulier, et, d'autre part, d'un premier plan qui est incliné par rapport à un second plan orthogonal à une direction générale longitudinale de la nacelle de réacteur, de sorte que le côté libre de ladite face d'entrée est en retrait, dans le sens d'entrée d'air, par rapport au côté opposé destiné à venir en regard de l'avion, et l'onde de choc engendrée par la rampe de compression conique ne sera pas ingérée par la face d'entrée, ledit premier plan étant incliné par rapport audit second plan d'un angle d'inclinaison qui est tel que la largeur maximale de la face d'entrée correspond à la largeur de la nacelle de réacteur au niveau d'une partie centrale destinée à recevoir une soufflante.

Ainsi, grâce à l'invention, on est en mesure d'augmenter la longueur de la face d'entrée et de réduire sa largeur (par rapport à une face d'entrée circulaire ou semi-circulaire notamment) de manière à l'adapter à la section de la face aval de ladite structure d'entrée d'air (qui sera située en regard d'une soufflante de réacteur, comme précisé ci-sera située en regard d'une soufflante de réacteur, comme précisé ci-dessous), ce qui permet de réduire la perturbation de l'écoulement d'air à travers ladite structure d'entrée d'air entre ses faces amont et aval. Ainsi, on améliore la qualité du flux d'air traversant la structure d'entrée d'air, ainsi que la stabilité de cette dernière, et on réduit la traînée de la nacelle.

On notera en outre qu'à vitesse réduite (à vitesse subsonique notamment), la surface de la face d'entrée à prendre en compte pour le flux d'air est la surface réelle. Or, avec une face d'entrée à section elliptique conforme à l'invention, lorsque la surface frontale (c'est-à-dire parallèlement audit second plan précité ou orthogonalement au plan général de la voilure) de cette face d'entrée est similaire à celle d'une face d'entrée semi-circulaire ou circulaire par exemple, sa surface réelle est plus élevée, ce qui est bénéfique pour le comportement de la structure d'entrée d'air lors d'un vol à vitesse réduite pour satisfaire des ordres de commande du réacteur.

De façon avantageuse, ledit premier plan est incliné par rapport audit second plan d'un angle d'inclinaison qui est compris entre 5° et 30°. De préférence, ledit angle d'inclinaison est sensiblement égal à 20,6°.

Dans un mode de réalisation préféré, ladite structure d'entrée d'air présente une forme permettant de passer d'une section conique elliptique à une section particulière, en forme de U, définie à partir d'un arc de cercle de rayon dépendant d'une longueur de rayon prédéterminée, à savoir la longueur du rayon de la soufflante du réacteur qui sera monté dans ladite nacelle.

Les figures du dessin annexé feront bien comprendre comment l'invention peut être réalisée. Sur ces figures, des références identiques désignent des éléments semblables.

La figure 1 montre schématiquement un avion muni de nacelles conformes à l'invention.

Les figures 2 à 4 sont respectivement des vues schématiques de face, de côté et de dessous d'une nacelle conforme à l'invention.

Les figures 5 et 6 sont des graphiques permettant de mettre en évidence des caractéristiques particulières d'une telle nacelle.

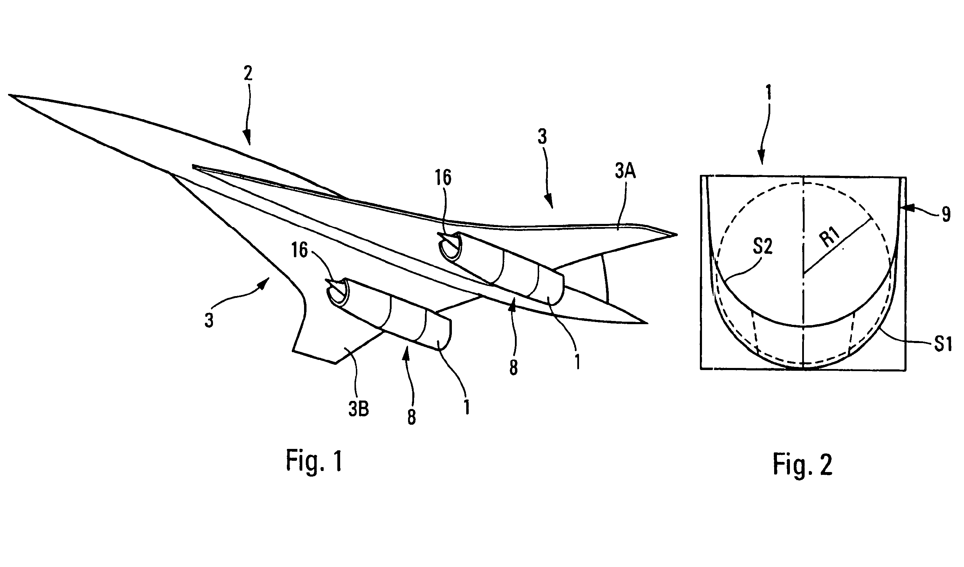

La nacelle 1 conforme à l'invention et représentée schématiquement sur les figures 1 à 4 est une nacelle de réacteur pour avion supersonique 2, en particulier un avion de transport ou un avion de chasse, qui est destinée à être montée directement sous la voilure 3 (ailes 3A et 3B) de l'avion 2, comme illustré sur la figure 1, ou sur le fuselage de l'avion 2 (dans le cas d'un avion trimoteur par exemple).

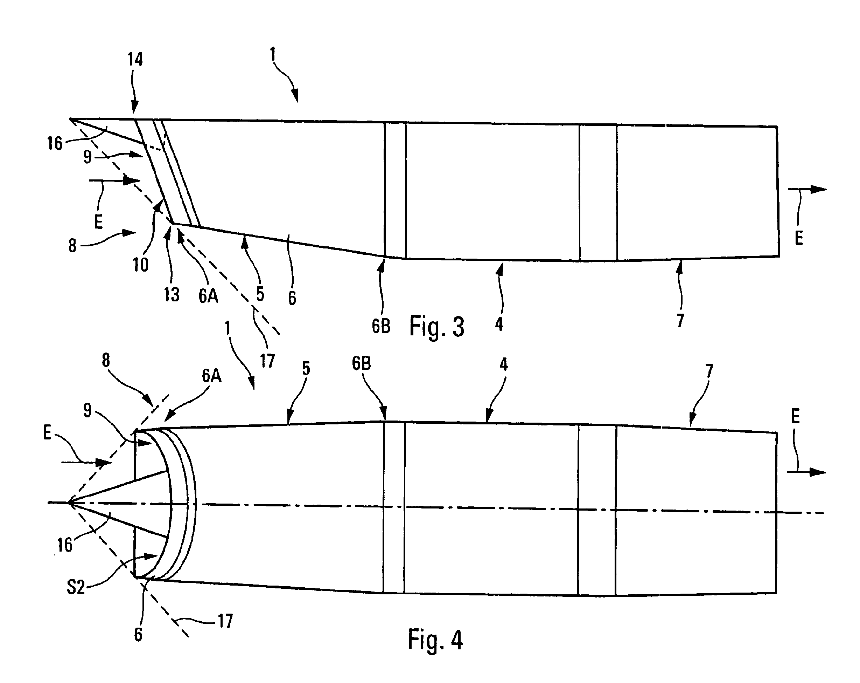

Ladite nacelle 1 qui est donc fixée directement sous une aile 3A, 3B ou sur le fuselage de l'avion 2, sans utilisation d'un mât de liaison par exemple, comporte de façon usuelle, comme représenté en particulier sur la figure 3 :
- une partie centrale 4 à section constante S1 précisée ci-dessous, ladite partie centrale 4 comportant dans sa partie intérieure un réacteur (non représenté) qui est muni de façon usuelle en amont d'une soufflante ;
- une partie 5 en amont, dans le sens E d'écoulement de l'air, qui est rattachée à ladite partie centrale 4 et qui comporte une structure d'entrée d'air 6 assurant l'écoulement aérodynamique, en transformant l'écoulement d'air en amont (face 6A), qui est supersonique et proche du Mach de croisière de l'avion 2, en un écoulement en aval de ladite structure d'entrée d'air 6 (face 6B) qui est admissible par la soufflante du réacteur ; et
- une partie 7 en aval, qui est également rattachée à ladite partie centrale 4 et qui présente une forme légèrement conique, dont la directrice correspond à la section S1 de ladite partie centrale 4, et qui comporte dans sa partie intérieure notamment une tuyère (non représentée) pour l'éjection de l'air. On sait que, par définition, une forme conique ou un cône est une surface qui est engendrée par une droite mobile passant par un point fixe et s'appuyant sur une courbe fixe ou directrice S1.

Ladite nacelle 1 et les éléments non représentés (réacteur, tuyère, ...) qui y sont montés, ainsi que les moyens de commande dudit réacteur, également non représentés, forment de façon usuelle une installation motrice 8.

Ladite installation motrice 8 comporte, en outre, une rampe de compression 16 qui est conique et qui est montée sous l'aile 3A, 3B ou sur le fuselage, de façon coaxiale par rapport à la nacelle 1, au niveau de la face d'entrée 9 de la structure d'entrée d'air 6.

Selon l'invention, ladite structure d'entrée d'air 6 présente une forme complexe lui permettant de passer d'une section conique elliptique S2 précisée ci-dessous à la section constante S1 de la partie centrale 4, tout en assurant une continuité aérodynamique.

Selon l'invention, ladite section S1 de la partie centrale 4 présente, comme illustré sur la figure 2, une forme en U définie (dans sa partie inférieure) à partir d'un arc de cercle de rayon dépendant d'une longueur de rayon prédéterminée, à savoir la longueur du rayon R1 de la soufflante du réacteur (à laquelle on ajoute une longueur auxiliaire permettant l'installation de systèmes usuels). Les branches libres de la forme en U de la nacelle 1 sont fixées sous l'aile 3A, 3B correspondante ou sur le fuselage de l'avion 2.

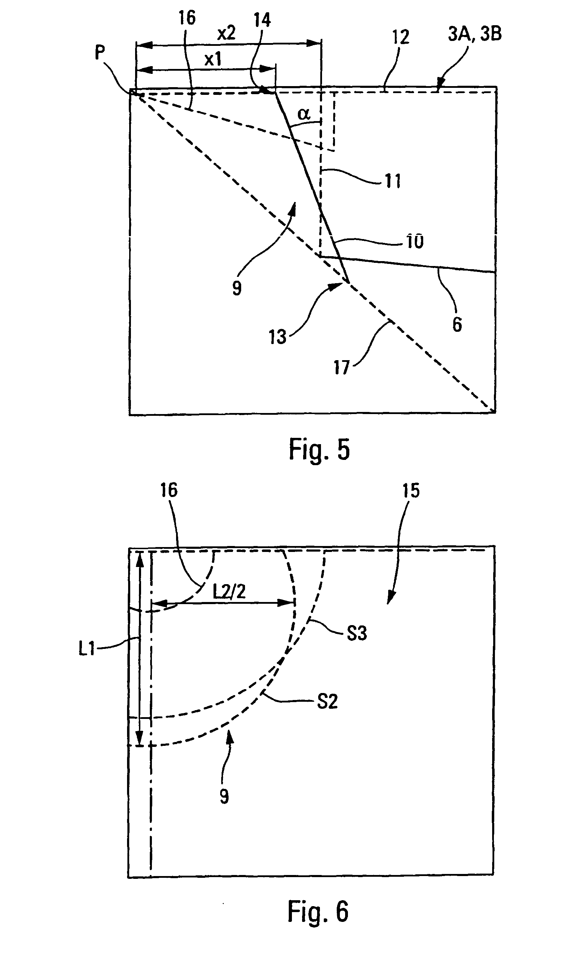

Par ailleurs, selon l'invention, la face d'entrée 9 de la structure d'entrée d'air 6 (au niveau de la face amont 6A) présente une section conique S2 qui est elliptique, c'est-à-dire qui forme une ellipse, et qui est définie par l'intersection d'une onde de choc conique 17 (engendrée par la rampe de compression 16) et d'un plan 10 représenté sur la figure 5. Ce plan 10 est incliné par rapport à un plan 11 qui est orthogonal à un plan moyen 12 de l'aile 3A, 3B ou à une direction générale longitudinale de la nacelle 1. De plus, cette inclinaison est telle que le côté libre 13 de ladite face d'entrée 9 est en retrait, dans le sens E d'entrée d'air, par rapport au côté opposé 14 destiné à venir en regard de la voilure 3 (figures 3 et 5) ou du fuselage.

Ainsi, grâce à cette caractéristique (face d'entrée 9 à section S2 elliptique), on est en mesure d'augmenter la longueur L1 de cette face d'entrée 9 et de réduire sa largeur L2 (par rapport à une face d'entrée circulaire ou semi-circulaire S3, comme représenté sur la figure 6) dans un plan frontal 15 parallèle audit plan 11 de manière à adapter le plus possible cette face d'entrée 9 à la section S1 de la face aval 6B de ladite structure d'entrée d'air 6 (qui est donc située en regard de la soufflante du réacteur), ce qui permet de réduire la perturbation de l'écoulement d'air à travers ladite structure d'entrée d'air 6 entre sa face amont 6A et sa face aval 6B. Ainsi, on améliore la qualité du flux d'air traversant ladite structure d'entrée d'air 6, ainsi que la stabilité de cette dernière, et on réduit la traînée de la nacelle 1.

On notera en outre qu'à vitesse réduite (à vitesse subsonique), la surface à prendre en compte pour le flux d'air est la surface réelle de la face d'entrée 9. Or, avec une face d'entrée 9 à section elliptique conforme à l'invention, lorsque la surface frontale (c'est-à-dire parallèlement audit plan 11 ou orthogonalement au plan général 12 de la voilure 3) de cette face d'entrée 9 est similaire à celle d'une face d'entrée semi-circulaire ou circulaire par exemple, sa surface réelle est plus élevée, ce qui est bénéfique pour le comportement de la structure d'entrée d'air 6 lors d'un vol à vitesse réduite pour satisfaire des ordres de commande du réacteur.

Par ailleurs, comme indiqué ci-dessus, la rampe de compression conique 16 engendre une compression de l'écoulement en amont de la face d'entrée 9, qui se traduit par l'onde de choc conique 17, dont le sommet est un point P (figure 5). On sait que plus le nombre de Mach local (au niveau de la rampe de compression 16) est élevé, plus le cône de l'onde de choc 17 se rétrécit. La forme conique elliptique S2 de la face d'entrée 9 permet au réacteur de ne pas ingérer cette onde de choc. Il est par conséquent intéressant de construire ladite face d'entrée 9 pour un nombre de Mach élevé qui sera toujours supérieur au nombre de Mach auquel va voler l'avion 2. A titre d'exemple, si l'avion 2 doit voler à une vitesse de croisière en Mach de 1,6 de sorte que le nombre de Mach local au niveau de la rampe de compression 16 est de 1,54, on peut dimensionner la face d'entrée 9 pour un nombre de Mach de 1,62 par exemple. Ainsi, on est certain que l'onde de choc ne sera jamais ingérée par le réacteur. Ladite onde de choc 17 engendrée par la rampe de compression 16 permet donc de définir la forme de l'entrée d'air.

En outre, ledit plan 10 est incliné par rapport audit plan 11 d'un angle d'inclinaison α qui est compris entre 5° et 30°. De préférence, ledit angle d'inclinaison α est sensiblement égal à 20,6°. La meilleure inclinaison est celle qui aboutit à ce que la largeur maximale L2 de la face d'entrée 9 soit la plus proche possible de la largeur de la nacelle 1 au niveau de la soufflante (partie centrale 4). Ainsi, on limite notamment la variation de section de la structure d'entrée d'air 6 entre sa face amont 6A (ou face d'entrée 9) et sa face aval 6B.

Du côté 14 de l'aile 3A, 3B, le plan 10 est situé à une distance x1 du point P. La distance x1 peut par exemple être définie de sorte que la face d'entrée 9 présente la même surface frontale qu'une face d'entrée d'air semi-circulaire située à une distance x2 prédéterminée.

## Revendications

1. Installation motrice pour avion supersonique, ladite installation motrice (8) comportant :
- au moins un réacteur ; et
- au moins une nacelle de réacteur (1) comprenant, en amont dans le sens (E) d'entrée d'air, une structure d'entrée d'air (6) pourvue en amont d'une face d'entrée (9) présentant une section conique (S2) elliptique,
**caractérisé en ce que :**
- ladite installation motrice (8) comporte, de plus, une rampe de compression (16) qui est montée de façon coaxiale par rapport à la nacelle de réacteur (1), au niveau de la face d'entrée (9) de la structure d'entrée d'air (6) de ladite nacelle de réacteur (1) ; et
- ladite face d'entrée (9) de la structure d'entrée d'air (6) présentant une section conique (S2) elliptique, est définie par l'intersection, d'une part, d'une onde de choc conique (17) engendrée par ladite rampe de compression conique (16) pour un nombre de Mach particulier, et, d'autre part, d'un premier plan (10) qui est incliné par rapport à un second plan (11) orthogonal à une direction générale longitudinale de la nacelle de réacteur (1), de sorte que le côté libre (13) de ladite face d'entrée (9) est en retrait, dans le sens (E) d'entrée d'air, par rapport au côté opposé (14) destiné à venir en regard de l'avion (2), et l'onde de choc (17) engendrée par la rampe de compression conique (16) ne sera pas ingérée par la face d'entrée (9), ledit premier plan (10) étant incliné par rapport audit second plan (11) d'un angle d'inclinaison (α) qui est tel que la largeur maximale (L2) de la face d'entrée (9) correspond à la largeur de la nacelle de réacteur (1) au niveau d'une partie centrale (4) destinée à recevoir une soufflante.

2. Installation motrice selon la revendication 1,
**caractérisée en ce que** ledit premier plan (10) est incliné par rapport audit second plan (11) d'un angle d'inclinaison (α) qui est compris entre 5° et 30°.

3. Installation motrice selon la revendication 2,
**caractérisée en ce que** ledit angle d'inclinaison (α) est sensiblement égal à 20,6°.

4. Installation motrice selon l'une quelconque des revendications 1 à 3,
**caractérisée en ce que** ladite structure d'entrée d'air (6) présente une forme permettant de passer d'une section conique elliptique (S2) à une section particulière (S1).

5. Installation motrice selon la revendication 4,
**caractérisée en ce que** ladite section particulière (S1) présente une forme en U et est définie à partir d'un arc de cercle, dont le rayon dépend de la longueur du rayon d'une soufflante destinée à être montée dans ladite nacelle de réacteur (1).

6. Avion supersonique,
**caractérisé en ce qu'**il comporte au moins une installation motrice (8) du type de celle spécifiée sous l'une quelconque des revendications 1 à 5.

## Claims

1. Power plant for a supersonic aircraft, said power plant (8) comprising:
- at least one jet engine; and
- at least one jet engine nacelle (1) comprising, upstream in the air inlet direction (E), an air inlet structure (6) provided upstream with an inlet face (9) exhibiting an elliptical conical cross section (S2),
**characterized in that:**
- said power plant (8) comprises, furthermore, a compression ramp (16) which is mounted coaxially with respect to the jet engine nacelle (1), at the level of the inlet face (9) of the air inlet structure (6) of said jet engine nacelle (1); and
- said inlet face (9) of the air inlet structure (6) exhibiting an elliptical conical cross section (S2), is defined by the intersection of a conical shock wave (17) generated by said conical compression ramp (16) for a particular Mach number and of a first plane (10) which is inclined with respect to a second plane (11) orthogonal to a longitudinal general direction of the jet engine nacelle (1), so that the free side (13) of said inlet face (9) is set back, in the air inlet direction (E), with respect to the opposite side (14) intended to face the aircraft (2), and the shock wave (17) generated by the compression ramp (16) will not be ingested by the inlet face (9), said first plane (10) being inclined with respect to said second plane (11) by an angle of inclination (α) which is such that the maximum width (L2) of the inlet face (9) corresponds to the width of the jet engine nacelle (1) at the level of a central part (4) intended to receive a fan.

2. The power plant as claimed in claim 1,
**characterized in that** said first plane (10) is inclined with respect to said second plane (11) by an angle of inclination (α) which lies between 5° and 30°.

3. The power plant as claimed in claim 2,
**characterized in that** said angle of inclination (α) is substantially equal to 20.6°.

4. The power plant as claimed in any one of claims 1 to 3,
**characterized in that** said air inlet structure (6) exhibits a shape making it possible to go from an elliptical conical cross section (S2) to a particular cross section (S1).

5. The power plant as claimed in claim 4,
**characterized in that** said particular cross section (S1) is U shaped and is defined on the basis of an arc of circle of radius dependent on the length of the radius of a fan intended to be mounted in said jet engine nacelle (1).

6. A supersonic aircraft,
**characterized in that** it comprises at least one power plant (8) of the type of that specified under any one of claims 1 to 5.

## Patentansprüche

1. Triebwerkanlage für Überschallflugzeuge, wobei die Triebwerkanlage (8) umfasst:
- mindestens ein Triebwerk, und
- mindestens eine Triebwerksgondel (1), die in Lufteinlaufrichtung (E) stromaufwärts eine Lufteinlaufstruktur (6) umfasst, die stromaufwärts mit einer Einlaufstirnseite (9) ausgestattet ist, die einen elliptisch-konischen Querschnitt (S2) aufweist,
**dadurch gekennzeichnet, dass:**
- die Triebwerkanlage (8) außerdem eine Verdichtungsrampe (16) umfasst, die an der Eintrittsstirnseite (9) der Lufteinlassstruktur (6) der Triebwerksgondel (1) koaxial zu der Triebwerksgondel (1) angeordnet ist und
- die Eintrittsstirnseite (9) der Lufteinlassstruktur (6) mit elliptisch-konischem Querschnitt (S2) durch den Schnittpunkt einer durch die konische Verdichtungsrampe (16) bei einer bestimmten Mach-Zahl hervorgerufenen konischen Stoßwelle (17) einerseits mit andererseits einer ersten Ebene (10), die gegenüber einer zweiten, zu einer allgemeinen Längsrichtung der Triebwerksgondel (1) orthogonalen Ebene (11) geneigt ist, so definiert ist, dass die freiliegende Seite (13) der Eintrittsstirnseite (9) bezogen auf die gegenüberliegende Seite (14), die dem Flugzeug (2) zugewandt liegen soll, in Richtung (E) des Lufteinlaufs zurückgesetzt ist und die von der konischen Verdichtungsrampe (16) hervorgerufene Stoßwelle (17) nicht von der Eintrittsstirnseite (9) aufgenommen wird, wobei die erste Ebene (10) gegenüber der zweiten Ebene (11) um einen Neigungswinkel (α) geneigt ist, der so bemessen ist, dass die maximale Breite (L2) der Eintrittsstirnseite (9) der Breite der Triebwerksgondel (1) im Bereich eines zur Aufnahme eines Gebläses bestimmten Mittelteils (4) entspricht.

2. Triebwerkanlage nach Anspruch 1,
**dadurch gekennzeichnet, dass** die erste Ebene (10) gegenüber der zweiten Ebene (11) um einen Neigungswinkel (α) geneigt ist, der zwischen 5° und 30° beträgt.

3. Triebwerkanlage nach Anspruch 2,
**dadurch gekennzeichnet, dass** der Neigungswinkel (α) ungefähr 20,6° beträgt.

4. Triebwerkanlage nach einem der Ansprüche 1 bis 3,
**dadurch gekennzeichnet, dass** die Lufteinlassstruktur (6) eine Form aufweist, die es ermöglicht, von einem elliptisch-konischen Querschnitt (S2) zu einem besonderen Querschnitt (S1) überzugehen.

5. Triebwerkanlage nach Anspruch 4,
**dadurch gekennzeichnet, dass** der besondere Querschnitt (S1) die Form eines U aufweist und ausgehend von einem Kreisbogen definiert ist, dessen Radius von der Länge des Radius eines zum Einbau in die Triebwerksgondel (1) vorgesehenen Gebläses abhängt.

6. Überschallflugzeug,
**dadurch gekennzeichnet, dass** es mindestens eine Triebwerkanlage (8) wie die unter einem der Ansprüche 1 bis 5 spezifizierte umfasst.
